# EUROPÄISCHE PATENTSCHRIFT

(11) **EP 3 866 963 B1**
(45) Veröffentlichungstag und Bekanntmachung des Hinweises auf die Patenterteilung: **24.01.2024**
(21) Anmeldenummer: 19783569.7
(22) Anmeldetag: 15.10.2019
(51) Int. Cl.: B01J 19/00, G01N 7/18, G01N 1/22, G01N 1/10, G01F 22/00

(54) **VORRICHTUNG UND VERFAHREN ZUR UNTERSUCHUNG VON REAKTIONEN**
METHOD AND APPARATUS FOR ANALYZING REACTIONS
DISPOSITIF ET PROCÉDÉ D'ANALYSE DES RÉACTIONS

(30) Priorität: 17.10.2018 EP 18201023
(43) Veröffentlichungstag der Anmeldung: 25.08.2021
(73) Patentinhaber: HTE GmbH The High Throughput Experimentation Company, 69123 Heidelberg (DE)
(72) Erfinder: KIRCHMANN, Marius, 69123 Heidelberg (DE); HAUBER, Christoph, 69123 Heidelberg (DE); JORDAN, Edgar, 69123 Heidelberg (DE); FINGER, Kurt-Erich, 69123 Heidelberg (DE); FRIESS, Markus, 69123 Heidelberg (DE); KOECHEL, Oliver, 69123 Heidelberg (DE)
(74) Vertreter: BASF IP Association
(86) Internationale Anmeldenummer: PCT/EP2019/077871
(87) Internationale Veröffentlichungsnummer: WO 2020/078952

(56) Entgegenhaltungen:
- WO-A1-2008/012073
- DE-A1-102004 039 378
- DE-B3-102014 110 544
- JP-A- H06 167 487
- US-A- 4 116 067
- JOHANNES A LERCHER ET AL: "In situ IR spectroscopy for developing catalysts and catalytic processes", VIBRATIONAL SPECTROSCOPY., Bd. 19, Nr. 1, 1. Februar 1999 (1999-02-01), Seiten 107-121, XP055557383, NL ISSN: 0924-2031, DOI: 10.1016/S0924-2031(98)00094-0

## Beschreibung

Die Erfindung geht aus von einer Vorrichtung zur Untersuchung von Reaktionen umfassend mindestens einen Reaktor und ein Probengefäß zur Aufnahme von zu untersuchendem Reaktionsprodukt. Die Erfindung betrifft weiterhin ein Verfahren zur Untersuchung von Reaktionen in einer solchen Vorrichtung.

Um den Einfluss verschiedener Parameter wie Druck, Temperatur, unterschiedliche Zusammensetzung der Eduktströme oder auch die Wirksamkeit unterschiedlicher Katalysatoren auf eine Reaktion zu testen, ist in der Regel eine große Anzahl an Versuchen erforderlich. Hierbei stellt sich das Problem, dass für vergleichbare Ergebnisse gezielt zu bestimmten Abschnitten Proben entnommen werden müssen, insbesondere, wenn es zum Beispiel aufgrund von Analysen, die längere Zeit in Anspruch nehmen, wie chromatographische Untersuchungen zur Zusammensetzung eines Reaktionsgemischs nicht möglich ist, die Untersuchungen kontinuierlich während der Versuchsdurchführung durchzuführen.

Eine Vorrichtung und ein Verfahren zur Untersuchung von Mehrkomponenten-Gemischen sind zum Beispiel aus WO 2008/012073 A1 bekannt. Die in der WO 2008/012073 A1 beschriebene Vorrichtung weist mindestens zwei parallele Reaktionsräume auf und zu jedem Reaktionsraum mindestens einen Hochdruckabscheider und einen Niederdruckabscheider, wobei der Hochdruckabscheider mit dem Reaktionsraum und der Niederdruckabscheider mit dem Hochdruckabscheider verbunden ist. Der Hochdruckabscheider weist weiterhin eine Ausgangsleitung auf, die mit einer Einheit zur Analyse verbunden ist.

Um Untersuchungen von Reaktionsgemischen durchführen zu können, werden üblicherweise während der Reaktion Proben genommen. Hierzu ist zum Beispiel aus DE 101 57 664 A1 bekannt, eine Probenziehvorrichtung einzusetzen, die einen Zylinder mit einem darin verschiebbaren Kolben umfasst. Um zu verhindern, dass reaktionsschädliche Gase in den Reaktor eindringen oder Gase aus dem Reaktor entweichen, wird die Vorrichtung mit einem Ventil an den Reaktor angeschlossen, über das der Auslass aus dem Reaktor verschlossen werden kann oder eine Verbindung aus dem Reaktor in die Probenziehvorrichtung oder eine Verbindung aus der Probenziehvorrichtung zu einem Auslass geöffnet werden kann.

Um ein exaktes Fluidvolumen zu fördern und damit eine Vergleichbarkeit von aufeinanderfolgenden Messungen sicherzustellen, ist aus WO 2004/104576 für Alkoholmessgeräte bekannt, eine Fördervorrichtung einzusetzen, die eine elektromotorisch betriebene KolbenZylindereinheit enthält, die mit einem Fluidvorrat in Verbindung steht und bei der der Kolben magnetische, elektrische und/oder elektromagnetische Eigenschaften aufweist und über eine um den Zylinder herum angeordnete Spule erregbar ist. Mit der Fördervorrichtung wird bei einer Kolbenbewegung in die eine Richtung ein bestimmtes Fluidvolumen aus dem Fluidvorrat in eine Messkammer eingesaugt und bei einer Bewegung des Kolbens in die andere Richtung wieder aus der Messkammer ausgestoßen.

Eine Vorrichtung zur Entnahme von definierten Gasmengen aus einem Gasvorrat und Zufuhr in einen Vorratsbehälter ist aus US 3,485,105 bekannt. Diese Vorrichtung wird insbesondere für die Entnahme von jeweils gleich großen Mengen eingesetzt, die in dem Vorratsbehälter zur Erfassung einer repräsentativen Probe gesammelt werden. Hierbei ist es insbesondere möglich, dass Gasvorrat und Vorratsbehälter unterschiedliche Druckhöhen aufweisen.

Eine Vorrichtung zur Entnahme von Fluidproben aus einem oder mehreren Druckbehältern mit mindestens einer Probenspeichereinheit, die über ein erstes Ventil mit dem Druckbehälter und über ein zweites Ventil mit einer Probenaufnahmeeinheit in Wirkverbindung steht ist aus der DE 10 2004 039 378 A1 bekannt. Die DE 10 2014 110 544 B3 offenbart eine Vorrichtung zur Entnahme einer Probe mit einem Probenahmezylinder mit einem darin geführten Probenahmekolben.

Nachteil der aus dem Stand der Technik bekannten Vorrichtungen ist, dass die Probennahme von Reaktionen zu vergleichbaren Zeitpunkten oder die Untersuchung von Reaktionsparametern über den Reaktionsverlauf, insbesondere von solchen, die nicht kontinuierlich gemessen werden können sondern die Auswertung einer Probe über einen bestimmten Zeitraum erfordern, nur schwer möglich ist. Auch ist es mit den bekannten Vorrichtungen schwierig Reihenuntersuchungen durchzuführen und dabei Proben zu vergleichbaren Zeitpunkten zu nehmen.

Aufgabe der vorliegenden Erfindung ist es daher, eine Vorrichtung zur Untersuchung von Reaktionen bereitzustellen, mit der es möglich ist, bei Reaktionen zu vergleichbaren Zeitpunkten Proben zu entnehmen oder Proben über den Reaktionsverlauf zu nehmen, um auch Untersuchungen durchführen zu können, die online nicht möglich sind.

Gelöst wird die Aufgabe durch eine Vorrichtung zur Untersuchung von Reaktionen, umfassend mehrere Reaktoren, wobei jeder Reaktor mit mindestens zwei nur diesem Reaktor zugeordneten Probengefäßen verbunden ist, wobei jedes Probengefäß ein einstellbares Volumen aufweist.

Durch die Verbindung jedes Reaktors mit mindestens zwei Probengefäßen ist es möglich, unabhängig vom Zeitpunkt der Probennahme Untersuchungen durchzuführen. Insbesondere ist es möglich, zu definierten Zeitpunkten Proben zu nehmen und an diesen auch Untersuchungen durchzuführen, die länger dauern als die Abstände zwischen zwei Zeitpunkten zur Probennahme. Bei einer Vorrichtung mit mehr als einem Reaktor, bei der jeder Reaktor mit mindestens einem Probengefäß verbunden ist, ist es möglich, mit entsprechend schaltbaren Ventilen aus jedem Reaktor zum gleichen Zeitpunkt eine Probe zu entnehmen. Hierbei kann in allen Reaktoren die gleiche Reaktion durchgeführt werden, um so auch Schwankungen im Reaktionsverlauf zu erfassen oder alternativ kann in jedem Reaktor eine Reaktion mit veränderten Parametern durchgeführt werden, um auf diese Weise den Einfluss von Änderungen von Reaktionsparametern auf die Reaktion zu untersuchen. Auch hierzu ist es notwendig, dass die Probennahme jeweils zum gleichen Zeitpunkt erfolgt. Wenn zusätzlich auch die Zeitabhängigkeit untersucht werden soll, werden auch bei der Vorrichtung mit mehreren Reaktoren jeweils mindestens zwei Probengefäße mit jedem Reaktor verbunden. Durch die Verbindung jedes Reaktors mit mindestens zwei Probengefäßen, bevorzugt mit mindestens vier Probengefäßen, mehr bevorzugt mit mindestens acht Probengefäßen und insbesondere mit mindestens sechzehn Probengefäßen ist es möglich, über den Verlauf der Reaktion zu vorgegebenen Zeitpunkten jeweils eine Probe zu entnehmen und diese unabhängig vom Reaktionsverlauf zu untersuchen. Die maximale Anzahl an Probengefäßen wird durch den zur Verfügung stehenden Bauraum und die Größe der Probengefäße vorgegeben. Vorzugsweise liegt die maximale Anzahl an Probengefäßen für jeden Reaktor bei 100, insbesondere bei 50. Wenn eine größere Anzahl an Proben genommen werden soll als Probengefäße mit dem Reaktor verbunden sind, ist es weiterhin möglich, die Probengefäße so mit dem Reaktor zu verbinden, dass diese während der Durchführung der Reaktion nach Probenentnahme entnommen und durch ein neues, leeres Probengefäß ersetzt werden können. Bei fest installierten Probengefäßen ist es alternativ möglich, diese mit einem geeigneten Ventil mit dem Reaktor zu verbinden, das erlaubt, nach der Probennahme die in dem Probengefäß enthaltene Probe in ein weiteres Gefäß zu transferieren. Hierbei ist es für Untersuchungen, die jeweils Ergebnisse für einen bestimmten Zeitpunkt der Reaktion liefern sollen, möglich, die Proben einzeln in kleine Untersuchungsgefäße zu transferieren. Soll ein Mittelwert über die Reaktionsdauer erfasst werden, können die einzelnen erfassten Proben auch in einem größeren Behälter gesammelt und in diesem gemischt werden, wobei dann die Untersuchungen an der so gesammelten Mischung durch geführt werden.

Wenn für die Verbindung der Probengefäße mit dem Reaktor steuerbare Ventile eingesetzt werden, ist es weiterhin möglich, die Proben automatisiert zu entnehmen. Wenn die steuerbaren Ventile über eine geeignete Schnittstelle verfügen, ist es weiterhin möglich, die Probennahme online über geeignete Eingabegeräte wie an die Schnittstelle angeschlossene Prozessleitsysteme, Computer, Smartphones oder Tablet-Computer zu steuern.

Um zu verhindern, dass neben dem zu untersuchenden Reaktionsprodukt, das dem Reaktor entnommen wurde, auch Verunreinigungen im Probengefäß enthalten sind und um die Probennahme zu erleichtern, weist jedes Probengefäß ein einstellbares Volumen auf. Besonders bevorzugt ist das Volumen vor Beginn der Probennahme null und nimmt während der Probennahme entsprechend der entnommenen Probe zu. Hierbei ist es auch möglich, durch Vergrößerung des Volumens des Probengefäßes einen Unterdruck zu erzeugen, so dass Reaktionsgas aufgrund des erzeugten Unterdrucks in das Probengefäß strömt. Um das Volumen des Probengefäßes einstellen zu können, ist es besonders vorteilhaft, wenn das Probengefäß einen Zylinder mit einem darin verschiebbaren Kolben umfasst. Wenn ein Unterdruck zur Probenentnahme erzeugt werden soll, kann dies auf einfache Weise durch Verschieben des Kolbens erfolgen. Durch die Bewegung des Kolbens wird in dem Zylinder ein Raum erzeugt, in den die Probe einströmen kann. Wenn das Reaktionsgemisch, das als Probe genommen werden soll, einen Druck aufweist, der oberhalb des Umgebungsdrucks liegt, wird der Kolben vorzugsweise durch das einströmende Reaktionsgemisch aus dem Zylinder herausgedrückt, wodurch das Volumen des Probengefäßes vergrößert wird. Alternativ ist es auch möglich, einen Unterdruck an den Kolben anzulegen und so den Kolben aufgrund des angelegten Unterdrucks zu bewegen und den Raum zu erzeugen, in den die Probe einströmen kann. Hierbei ist sowohl eine hydraulische als auch eine pneumatische Steuerung des Kolbens möglich. Bei einer pneumatischen Steuerung kann jedes beliebige Gas genutzt werden, bevorzugt ist Luft. Eine hydraulische Steuerung lässt sich beispielsweise mit einer beliebigen Flüssigkeit, insbesondere Hydrauliköl oder Wasser realisieren.

Der das Probengefäß bildende Zylinder kann jede beliebige Querschnittsform aufweisen. So ist es zum Beispiel möglich, einen Zylinder mit einer kreisförmigen Grundfläche oder einen Zylinder mit einer eckigen Grundfläche, beispielsweise einer dreieckigen, viereckigen, fünfeckigen oder sechseckigen Grundfläche einzusetzen. Auch alle anderen Formen sind möglich, besonders bevorzugt ist jedoch ein Zylinder mit einer kreisförmigen Grundfläche. Der in dem Zylinder verschiebbare Kolben weist eine Form auf, die der Grundfläche des Zylinders entspricht, so dass der Kolben bei einer Bewegung an der Innenwandung des Zylinders anliegt. Vorzugsweise ist der Kolben zusätzlich von einem Dichtelement, beispielsweise einem O-Ring oder einer Dichtschnur umschlossen, die vom Kolben gegen die Innenwandung des Zylinder gedrückt wird, um zu verhindern, dass als Probe genommenes Reaktionsgemisch durch einen möglichen Spalt zwischen Kolben und Innenwandung des Zylinders austreten kann.

Um mögliche Verunreinigungen aus dem Probengefäß zu entfernen ist es vorteilhaft, das Probengefäß vor Einsatz mit einem gegenüber dem aufzunehmenden Reaktionsgemisch inerten Spülmittel zu spülen. Hierzu können zum Beispiel Gase wie Stickstoff oder Edelgase eingesetzt werden. Das inerte Spülmittel wird vorzugsweise über eine Spülleitung dem Probengefäß zugeführt, wobei die Spülleitung entweder direkt mit dem Probengefäß verbunden ist oder in die Zuleitung in das Probengefäß mündet. Wenn die Spülleitung in die Zuleitung in das Probengefäß mündet, wird vorzugsweise ein Ventil eingesetzt, in das die Zuleitung und die Spülleitung münden und aus dem dann die Zuleitung in das Probengefäß abzweigt. Vorzugsweise wird hier ein steuerbares Ventil eingesetzt, so dass auch das Spülen des Probengefäßes automatisiert werden kann. Wenn das als Probe entnommene Reaktionsgemisch mit einem inerten Medium verdünnt werden soll, ist es vorteilhaft, wenn zum Spülen das gleiche inerte Medium verwendet wird.

Um die entnommene Probe mit einem inerten Medium mischen zu können, sind die Probengefäße vorzugsweise mit einer Quelle für ein Inertmedium verbunden. Hierzu kann zum Beispiel eine Inertleitung in das Probengefäß oder eine Zuleitung in das Probengefäß münden. Die Quelle für das Inertmedium ist zum Beispiel ein Vorratsbehälter, der das inerte Medium enthält. Bei einer Flüssigkeit als inertem Medium kann beispielsweise ein Flüssigkeitstank oder beliebiger anderer Flüssigkeitsbehälter als Quelle für das Inertmedium eingesetzt werden. Wenn das inerte Medium ein Gas ist, ist die Quelle für das Inertmedium zum Beispiel ein geeigneter Gasvorrat, zum Beispiel ein das Gas enthaltender Druckbehälter. Wenn das Inertmedium nicht nur zur Verdünnung des Reaktionsgemisches verwendet wird sondern auch zum Spülen, ist es vorteilhaft, das Inertmedium zum Spülen über die gleiche Leitung zuzuführen, über die es auch zur Verdünnung des Reaktionsgemisches zugeführt wird. In diesem Fall ist es somit nicht erforderlich, separate Inertleitungen und Spülleitungen vorzusehen.

Um mit jedem Probengefäß eine eindeutig definierte Probenmenge zu entnehmen, ist es bevorzugt, wenn bei Verwendung eines Zylinders mit darin verschiebbarem Kolben als Probengefäß am Zylinder mindestens ein Positionssensor angebracht ist, mit dem die Position des Kolbens erfasst werden kann. Hierzu eignen sich zum Beispiel Sensoren, mit denen die jeweiligen Endpositionen des Kolbens, das heißt die Position bei leerem Probengefäß und die Position bei vollem Probengefäß nach Entnahme der Probe erfasst werden. Dies kann zum Beispiel durch optische, induktive, mechanische oder Ultraschallsensoren erfolgen. Alternativ ist es auch möglich, zum Beispiel durch Verwendung eines Schrittmotors für die Bewegung des Kolbens die genaue Position und damit das exakte Probenvolumen zu jedem Zeitpunkt der Probennahme zu erfassen. Ein weiterer Vorteil der Verwendung eines Probengefäßes mit einem verschiebbaren Kolben ist, dass zur Entnahme der Probe kein zusätzliches Gas zur Verdrängung benötigt wird. Bei Verfahren, mit denen die Probe durch ein Gas aus dem Probengefäß verdrängt wird, um diese zu einer Analyseneinheit zu transportieren besteht das Risiko, dass sich das zur Verdrängung eingesetzte Gas mit dem Reaktionsgemisch vermischt und so zu verfälschten Ergebnissen führt. Ein weiterer Vorteil ist, dass bei einer Ansteuerung des Kolbens über einen geeigneten Antrieb, beispielsweise einen Schrittmotor, auch eine automatisierte Entnahme der Probe zur Zufuhr in eine Analyseneinheit möglich ist. Wenn der Kolben hydraulisch oder pneumatisch gesteuert wird, kann dies alternativ durch Erzeugung eines Überdrucks auf der der Probe abgewandten Seite des Kolbens geschehen, so dass der Kolben in Richtung der Probe bewegt wird und diese aus dem Probengefäß herausdrückt. Dies erlaubt es zum Beispiel, voll automatisiert eine Probe in ein Probengefäß aufzunehmen, die Probe zur Analyseneinheit zu transportieren und anschließend das Probengefäß vor Aufnahme einer weiteren Probe zu spülen.

Um aus einem Reaktor nacheinander zu vorgegebenen Zeitpunkten Proben entnehmen zu können, weist der Reaktor vorzugsweise einen Auslass auf, der mit einem Mehrwegeventil verbunden ist und jeder Ausgang des Mehrwegeventils ist mit einem Probengefäß verbunden. Der Einsatz des Mehrwegeventils erlaubt es, unmittelbar nacheinander Proben zu entnehmen und jede Probe in ein neues Probengefäß einzufüllen. Hierzu kann jeweils nach Abschluss der Entnahme einer Probe, zum Beispiel nach einer vorgegebenen Entnahmedauer oder einer vorgegebenen Probenmenge das Mehrwegeventil weitergeschaltet werden und der Zulauf in ein weiteres noch leeres Probengefäß freigegeben werden. Alternativ ist es auch möglich, nach der Entnahme einer Probe zunächst alle Probengefäße zu verschließen und zu einem späteren vorgegebenen Zeitpunkt den Zulauf in ein weiteres, noch leeres Probengefäß zu öffnen und eine weitere Probe zu entnehmen. Auch in diesem Fall wird die Probennahme vorzugsweise nach Ablauf einer vorgegebenen Entnahmedauer oder nach Entnahme einer vorgegebenen Probenmenge durch verschließen des entsprechenden Probengefäßes beendet. Bevorzugt ist es in allen Varianten, die Probennahme nach Entnahme einer vorgegebenen Probenmenge zu beenden.

Die Probenmenge wird dabei vorzugsweise über die Position des Kolbens des Probengefäßes erfasst. Sobald der Kolben eine vorgegebene Position erreicht hat, die der zu entnehmenden Probenmenge entspricht, wird die Probennahme beendet. Bei einer Probenentnahme durch Anlegen eines Unterdrucks, indem der Kolben aus dem Zylinder herausgezogen wird, kann die Probennahme entweder durch Messung des Drucks im Probengefäß oder auch durch eine vorgegebene Entnahmedauer eingestellt werden. Abhängig von der Dauer der Reaktion und der Größe der verwendeten Reaktoren können unterschiedlich große Probengefäße eingesetzt werden. Für eine häufige Probennahme in kurzen Abständen, um beispielsweise den Reaktionsverlauf zu untersuchen, werden vorzugsweise kleinere Probengefäße mit einem Volumen im Bereich von 20 bis 1000 ml, vorzugsweise im Bereich von 100 bis 500 ml eingesetzt, wohingegen bei Untersuchungen von längeren Reaktionen, bei denen über einen längeren Zeitraum kontinuierlich Proben entnommen werden sollen und diese in einem Probengefäß gemischt werden oder auch bei größeren Reaktoren, Probengefäße eingesetzt werden können, die ein Volumen von 100 ml bis 20 I, bevorzugt 1 bis 15 I aufweisen.

Insbesondere, wenn mehrere Reaktoren parallel betrieben werden und für eine Untersuchung aus jedem Reaktor zum gleichen Reaktionszeitpunkt eine Probe entnommen werden soll, ist es vorteilhaft, wenn zwischen jedem Reaktor und dem damit verbundenen Probengefäß ein schaltbares Ventil aufgenommen ist, mit dem der Zulauf in das Probengefäß gesteuert werden kann. So erlaubt es der Einsatz von schaltbaren Ventilen zum Beispiel, alle Ventile gleichzeitig zu öffnen und zu schließen, so dass aus allen Reaktoren zum gleichen Zeitpunkt eine Probe entnommen wird. Dies ist insbesondere dann sinnvoll, wenn in den Reaktoren jeweils die gleiche Reaktion durchgeführt wird und alle Reaktoren mit einem gemeinsamen Eduktzulauf verbunden sind, so dass auch in allen Reaktoren gleichzeitig die Reaktion gestartet wird. Alternativ erlaubt es ein steuerbares Ventil auch, zu definierten Zeitpunkten nach Start der Reaktion in einem Reaktor Proben zu entnehmen. In diesem Fall werden die Intervalle, zu denen Proben genommen werden sollen, vorgegeben und der Startpunkt für die Messung des ersten Intervalls ist zum Beispiel das Erreichen eines vorgegebenen Prozessparameters oder der Beginn der Zufuhr von Edukt in den entsprechenden Reaktor.

Wenn die zu entnehmenden Probenmengen größer sind als die Probengefäße, ist es weiterhin möglich, mehrere Probengefäße mit einem Reaktor zu verbinden. Hierbei ist vor jedem Probengefäß ein schaltbares Ventil positioniert. Zur Probenentnahme wird das schaltbare Ventil vor einem ersten Probengefäß geöffnet, so dass die Probe in das Probengefäß strömen kann. Sobald das Probengefäß befüllt ist, wird das schaltbare Ventil geschlossen und das schaltbare Ventil eines weiteren Probengefäßes geöffnet. Dies kann so lange wiederholt werden, bis alle Probengefäße befüllt sind. Weiterhin ist es in diesem Fall auch möglich, bereits eine Probe aus einem bereits befüllten Probengefäß zu entnehmen und zu analysieren, während noch weitere Probengefäße befüllt werden. In diesem Fall kann nach dem Entnehmen der Probe aus dem Probengefäß und einem möglichen Spülen des Probengefäßes wieder eine neue Probe aufgenommen werden.

Die in der Vorrichtung zur Untersuchung von Reaktionen eingesetzten Reaktoren können sowohl Batchreaktoren als auch kontinuierlich betriebene Reaktoren sein. In Batchreaktoren kann durch den Einsatz von mehreren Probengefäßen, die nacheinander befüllt werden, zum Beispiel der Reaktionsverlauf untersucht werden. In kontinuierlich betriebenen Reaktoren lässt sich demgegenüber durch den Einsatz mehrerer Probengefäße, die nacheinander befüllt werden, untersuchen, ob im Reaktionsverlauf Schwankungen auftreten oder auch, wie lange es dauert, bis sich ein stationärer Betrieb eingestellt hat.

Da die Vorrichtung zur Untersuchung von Reaktionen mehrere Reaktoren umfasst, ist es möglich, in allen Reaktoren die gleiche Reaktion durchzuführen, um auf diese Weise Schwankungen und Unterschiede im Reaktionsverlauf zu untersuchen. Alternativ erlaubt es der Einsatz von mehreren Reaktoren auch, einzelne Reaktionsparameter zu variieren und so den Einfluss der einzelnen Reaktionsparameter auf die Reaktion zu untersuchen. Mögliche Reaktionsparameter, die variiert werden können, sind zum Beispiel Temperatur, Druck und bei kontinuierlichen Reaktionen die Mengenströme der eingesetzten Edukte und das Mengenverhältnis der einzelnen Edukte, bei batchweise betriebenen Reaktionen entsprechend die Menge der einzelnen eingesetzten Edukte. Weiterhin ist es auch möglich, unterschiedliche Katalysatoren einzusetzen und so die Wirksamkeit unterschiedlicher Katalysatoren für eine Reaktion zu untersuchen.

Um für solche Untersuchungen, bei denen die Reaktionsparameter variiert werden oder unterschiedliche Katalysatoren eingesetzt werden, vergleichbare Untersuchungsergebnisse zu erhalten, ist es erforderlich, dass die Proben jeder Reaktion jeweils zu definierten Zeitpunkten entnommen werden und auch die Probenmengen jeweils gleich groß sind. Die in den einzelnen Probengefäßen enthaltenen Proben können nach der Probenentnahme analysiert werden, zum Beispiel um den Umsatz zu ermitteln oder auch während der Reaktion entstandene Nebenprodukte zu erfassen. Hierzu können die aus der chemischen Analytik bekannten Untersuchungsverfahren, zum Beispiel chromatographische Verfahren wie Gaschromatographie oder Hochleistungsflüssigkeitschromatographie, spektrometrische Verfahren wie Massenspektroskopie, spektroskopische Verfahren wie Infrarotspektroskopie und UV/VIS oder auch Kombinationen unterschiedlicher Verfahren eingesetzt werden.

Die Vorrichtung eignet auch sich zur Kalibrierung von Analysegeräten, da aus einem veränderlichen Produktgemisch aus einem Reaktor durch Sammeln und thermische Equilibrierung im Probengefäß eine homogene Probe erzeugt werden kann. Die Probe kann dann durch eine Kombination unterschiedlicher analytischer Verfahren geleitet werden, wodurch mit einem Verfahren bekannter Kalibrierung andere Verfahren mit unbekannter Kalibrierung kalibriert werden können. Zum Beispiel können ein Analysegerät mit einem einfach zu kalibrierenden chromatographischen Verfahren (z.B. Gaschromatographie) und ein Analysegerät mit einem spektroskopischen Verfahren (z.B. IR) mit der gleichen Probe durchströmt werden, um eine Kalibrierung für das Analysengerät mit spektroskopischem Verfahren zu erhalten, welches nachfolgend mit höherer Zeitauflösung als das chromatographische Verfahren die Reaktionsprodukte eines Reaktors verfolgen kann. Dies kann insbesondere im Bereich der Chemometrie zum Einsatz kommen, bei welcher chemische Informationen durch mathematische und statistische Methoden aus experimentellen Messdaten extrahiert werden können und im Vorfeld ein entsprechendes Model aus Proben bekannter Zusammensetzung generiert werden muss.

Die Vorrichtung eignet sich zur Untersuchung von Reaktionen, die in der Gasphase durchgeführt werden, für solche, die in der Flüssigphase durchgeführt werden und für Gas/Flüssig-Reaktionen. Besonders geeignet ist die Vorrichtung zur Untersuchung von Reaktionen in der Gasphase oder Gas/Flüssig-Reaktionen, hier insbesondere solchen, bei denen das Reaktionsprodukt gasförmig ist und mindestens ein Edukt flüssig. Wenn bei der Reaktion mehrere Produkte entstehen oder in einer Gleichgewichtsreaktion nur ein Teil der Edukte umgesetzt wird, ist es möglich, vor der Probenentnahme zunächst eine Trennung des dem Reaktor entnommenen Reaktionsgemischs durchzuführen. Hierzu können zum Beispiel, wie in WO 2008/012073 A1 beschrieben, ein Hochdruck-Abscheider und ein Niederdruck-Abscheider eingesetzt werden. Die Probengefäße können dann sowohl mit einem Auslass aus dem Hochdruckabscheider als auch mit einem Auslass am Niederdruckabscheider verbunden werden, um auf diese Weise die unterschiedlichen Komponenten, in die das den Reaktor verlassende Reaktionsgemisch im Hochdruckabscheider und im Niederdruckabscheider getrennt wird, zu untersuchen.

Insbesondere, wenn das Reaktionsgemisch aus dem Reaktor gasförmig entnommen wird und einen Kondensationspunkt aufweist, der oberhalb der Umgebungstemperatur liegt, so dass zumindest ein Teil des Reaktionsgemisches bei Abkühlung kondensiert, ist es bevorzugt, wenn die Probengefäße beheizbar sind. Hierdurch lassen sich die Probengefäße auf eine Temperatur oberhalb der Kondensationstemperatur des Reaktionsgemischs aufwärmen, so dass das Reaktionsgemisch im Probengefäß gasförmig bleibt. Dies ist insbesondere dann vorteilhaft, wenn die anschließenden Reaktionen oder Analysen in der Gasphase durchgeführt werden sollen oder wenn bei Abkühlung eine Auftrennung des Reaktionsgemischs in eine Flüssigphase und eine Gasphase erfolgt, die zu fehlerhaften oder ungenauen Messergebnissen führen kann, insbesondere wenn die genaue Zusammensetzung des Reaktionsgemischs erfasst werden soll. Vorzugsweise können die Probengefäße auf eine Temperatur bis zu 100°C, und insbesondere auf eine Temperatur bis zu 150°C aufgeheizt werden, wobei bei Untersuchung von Reaktionen mit entsprechend hochsiedenden Komponenten auch eine Beheizung auf höhere Temperaturen denkbar ist. Vorzugsweise werden die Probengefäße elektrisch beheizt, wobei bei stationärem Einbau der Probengefäße auch eine Beheizung mit einem Heizmedium, beispielsweise einem Thermalöl oder auch Dampf möglich ist. Bei einem nicht stationären Einbau, beispielsweise, wenn die Probengefäße nach der Probenentnahme entnommen werden sollen, um diese zu einer Analyseneinheit zu transportieren, ist es vorteilhaft, eine elektrische Beheizung vorzusehen, die mit einem geeigneten Akkumulator während des Transports aufrechterhalten werden kann. Alternativ kann für den Transport auch eine Isolierung des Probengefäßes ausreichend sein, wobei hier für die einfachere Handhabbarkeit durch Ein- und Ausstecken einer elektrischen Spannungsversorgung eine elektrische Beheizung bevorzugt ist.

Der Druck im Probengefäß entspricht vorzugsweise dem Druck der Reaktion. Dieser liegt in der Regel im Bereich von 0 bis 10 bar(abs), vorzugsweise im Bereich von 1 bis 5 bar(abs). Es ist jedoch auch möglich, unterschiedliche Drücke im Probengefäß und im Reaktor einzustellen, wobei in diesem Fall vorzugsweise bei einer Reaktion unter erhöhtem Druck ein niedrigerer Druck im Probengefäß, beispielsweise Umgebungsdruck, und bei einer Reaktion unterhalb Umgebungsdruck einen höheren Druck im Probengefäß, beispielsweise Umgebungsdruck, eingestellt wird.

Ein Verfahren zur Untersuchung von Reaktionen in einer solchen Vorrichtung umfasst üblicherweise folgende Schritte:
(a) Durchführen einer Reaktion in jedem der Reaktoren, wobei alle Reaktionen unter den gleichen Reaktionsbedingungen durchgeführt werden oder wobei in jedem Reaktor die Reaktionsbedingungen variiert werden;
(b) Entnehmen einer Probe aus jedem Reaktor zu einem vorgegebenen Zeitpunkt in das Probengefäß, wobei aus jedem Reaktor zum vorgegebenen Zeitpunkt eine Probe entnommen wird oder gepulste Entnahme von Proben, wobei mit jedem Entnahmepuls aus dem Reaktor entnommenes Reaktionsmedium in ein neues Probengefäß eingebracht wird;
(c) Untersuchung der in den Probengefäßen enthaltenen Proben.

Wie vorstehend bereits dargelegt unterscheidet sich der Betrieb der Reaktoren in Schritt (a) in Abhängigkeit von den zu untersuchenden Eigenschaften. Wenn beabsichtigt ist, Schwankungen in einer Reaktion zu untersuchen, werden alle Reaktionen unter den gleichen Bedingungen durchgeführt. Wenn der Einfluss von unterschiedlichen Reaktionsbedingungen, beispielsweise unterschiedlichen Eduktmengen, unterschiedlichen Temperaturen oder unterschiedlichen Drücken oder auch verschiede Katalysatoren, untersucht werden soll, werden vorzugsweise in jedem Reaktor die Reaktionsbedingungen variiert. Sollen in diesem Fall auch Schwankungen in den Reaktionen untersucht werden, ist es weiterhin auch möglich, jeweils eine bestimmte Anzahl der Reaktoren mit den gleichen Reaktionsbedingungen zu betreiben.

Zur Untersuchung des Reaktionsverlaufs werden in Schritt (b) die Proben gepulst entnommen, wobei hier die Entnahme in vorgegebenen Intervallen erfolgt. Hierbei ist es auch möglich, jeweils sofort nachdem die Entnahme in ein Probengefäß beendet ist, mit der Entnahme in ein nachfolgendes Probengefäß zu beginnen. Die Entnahmedauer ist dabei entweder fest vorgegeben oder es wird jeweils eine Probe entnommen, bis eine vorgegebene Probenmenge im Probengefäß enthalten ist. Hierzu kann beispielsweise die Position des Kolbens des Probengefäßes erfasst werden.

Bei einer Probenentnahme bis eine bestimmte Menge an Probe im Gefäß enthalten ist, ist es weiterhin vorteilhaft, wenn parallel aus mehreren Reaktoren Proben entnommen werden sollen, jeweils mit der Probennahme in ein nachfolgendes Probengefäß erst dann zu beginnen, wenn die Probenentnahme in ein Probengefäß an allen Reaktoren beendet ist. Hierdurch wird sichergestellt, dass die Proben jeweils zum gleichen Zeitpunkt entnommen wurden, so dass die Untersuchung der entnommenen Proben vergleichbare Ergebnisse liefert.

Die Untersuchung der Proben in Schritt (c) kann mit bekannten Analysegeräten durchgeführt werden, zum Beispiel, wie vorstehend bereits erwähnt, mit chromatographischen, spektrometrischen oder spektroskopischen Verfahren.

Um die Reaktionen zu untersuchen, werden vorzugsweise neben den entnommenen Proben, deren Zusammensetzung erfasst werden kann, auch weitere Reaktionsparameter erfasst. Diese weiteren Reaktionsparameter umfassen zum Beispiel den Druck und die Temperatur im Reaktor.

In Abhängigkeit von den untersuchten Reaktionen und den durchzuführenden Untersuchungen ist es möglich, die entnommenen Proben mit einem inerten Medium zu mischen. Das Mischen mit dem inerten Medium kann dabei im Probengefäß erfolgen. Alternativ ist es auch möglich, die Probe aus dem Probengefäß in ein weiteres Gefäß zu transferieren und das inerte Medium in dem weiteren Gefäß zuzumischen.

Insbesondere bei der Untersuchung von kontinuierlich durchgeführten Reaktionen kann auch gewünscht sein, über den Reaktionsverlauf gemittelte Werte zu erfassen. Hierzu können zum Beispiel die nacheinander aus einem Reaktor entnommenen Proben in ein weiteres Gefäß eingebracht und in diesem Gefäß gemischt werden. Anhand dieser gemischten nacheinander entnommenen Proben kann dann zum Beispiel eine mittlere Zusammensetzung des Reaktionsgemischs ermittelt werden. Das Transferieren des als Probe entnommenen Reaktionsgemischs in das weitere Gefäß erfolgt dann vorzugsweise vor der Untersuchung in Schritt (c). Wenn in mehreren Reaktoren die gleiche Reaktion durchgeführt wird und gemittelte Werte erfasst werden sollen, die sich zu vorgegebenen Zeitpunkten einstellen, ist es alternativ auch möglich, die Proben, die den einzelnen Reaktoren jeweils zum gleichen Zeitpunkt entnommen wurden, in ein gemeinsames Gefäß zu transferieren und in diesem vor der Untersuchung zu mischen.

Mit der erfindungsgemäßen Vorrichtung ist es somit möglich, Reihenuntersuchungen durchzuführen und vergleichbare Daten für jede der durchgeführten Reaktionen zu erfassen oder auch einen Reaktionsverlauf präzise zu analysieren.

Aspekte zum besseren Verständnis der Erfindung sind in den Figuren dargestellt und werden in der nachfolgenden Beschreibung näher erläutert.

Es zeigen:
- Figur 1: einen Ausschnitt aus einer nicht erfindungsgemäßen Vorrichtung zur Untersuchung von Reaktionen mit einem Reaktor und einem Probengefäß,
- Figur 2: eine nicht erfindungsgemäße Vorrichtung zur Untersuchung von Reaktionen mit einem Abscheider,
- Figur 3: eine Vorrichtung zur Untersuchung von Reaktionen am Beispiel mit einem Reaktor und mehreren Probengefäßen,
- Figur 4: eine nicht erfindungsgemäße Vorrichtung zur Untersuchung von Reaktionen mit mehreren Reaktoren,
- Figur 5: eine nicht erfindungsgemäße Vorrichtung zur Untersuchung von Reaktionen mit mehreren Reaktoren.

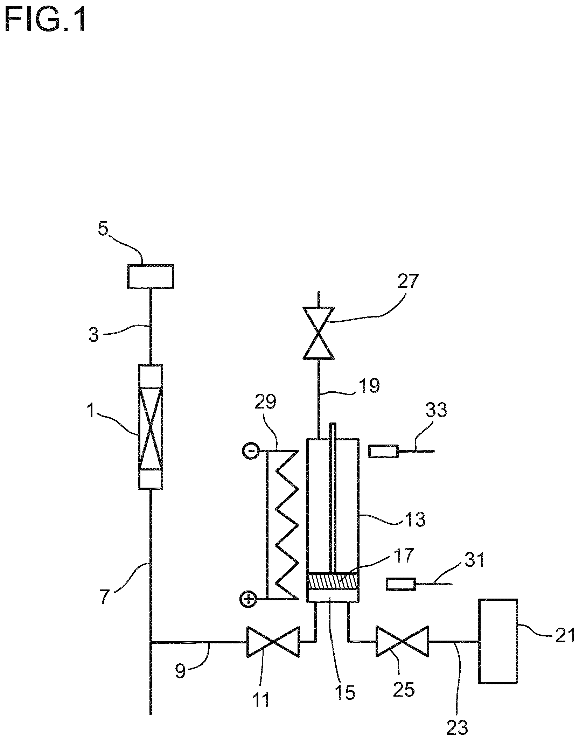

Figur 1 zeigt einen Ausschnitt aus einer nicht erfindungsgemäßen Vorrichtung zur Untersuchung von Reaktionen mit einem Reaktor und einem Probengefäß.

Zur Untersuchung einer Reaktion werden einem Reaktor 1 über eine Zuleitung 3 Edukte zugeführt. Diese werden in dem Reaktor zu einem Reaktionsprodukt umgesetzt, wobei abhängig von der Reaktion eine vollständige oder teilweise Umsetzung der Edukte erfolgen kann. Zusätzlich kann dem Reaktor auch ein Inertmedium zugeführt werden. Die Edukte können dem Reaktor entweder einzeln über jeweils separate Zuleitungen 3 zugeführt werden oder alternativ, wie hier dargestellt, in einem Mischer 5 gemischt und dann über die Zuleitung 3 in den Reaktor eingeleitet werden.

Im Reaktor 1 kann jeder beliebige, für die zu untersuchende Reaktion geeignete Katalysator eingesetzt werden. Wenn ein homogener Katalysator verwendet wird, wird dieser vorzugsweise den Edukten zugemischt. Auch wenn weitere Stoffe benötigt werden, die an der Reaktion nicht teilnehmen, beispielsweise Initiatoren, werden diese entweder direkt in den Reaktor eingeleitet oder alternativ bereits vor Einleitung in den Reaktor mit den Edukten vermischt, beispielsweise im Mischer 5.

Bei einer heterogen katalysierten Reaktion ist der Katalysator vorzugsweise fest im Reaktor aufgenommen, beispielsweise als Packung oder Schüttung. Alternativ ist es jedoch auch möglich, den Katalysator in Form eines Wirbelbettes oder eines Fließbettes einzusetzen. Ein Fließbett ist insbesondere dann bevorzugt, wenn der Katalysator regelmäßig ausgetauscht oder regeneriert werden muss.

Über eine Ablaufleitung 7 wird das im Reaktor 1 erzeugte Reaktionsgemisch aus dem Reaktor entnommen. Um das Reaktionsgemisch analysieren zu können, müssen Proben des Reaktionsgemischs entnommen werden. Hierzu zweigt eine Probenleitung 9 aus der Ablaufleitung 7 ab. Diese ist über ein erstes Ventil 11 mit einem Probengefäß 13 verbunden. Wenn beabsichtigt ist, das gesamte im Reaktor erzeugte Reaktionsgemisch zu untersuchen, ist es nicht notwendig eine aus der Ablaufleitung 7 abzweigende Probenleitung 9 vorzusehen. In diesem Fall kann die Ablaufleitung 7 direkt mit dem Probengefäß 13 verbunden werden, wobei auch in diesem Fall das erste Ventil 11 vor dem Zulauf in das Probengefäß 13 erforderlich ist, um das Einströmen des Reaktionsgemischs in das Probengefäß 13 unterbrechen zu können.

Um eine Probe zu entnehmen, wird das erste Ventil 11 geöffnet. Bei geöffnetem ersten Ventil 11 kann dann Reaktionsgemisch aus dem Reaktor 3 über die Probenleitung 9 in einen Probenraum 15 im Probengefäß 13 strömen. Der Probenraum 15 wird vorzugsweise, wie hier dargestellt, auf einer Seite von einem im Probengefäß 13 verschiebbaren Kolben 17 begrenzt. Mit dem Kolben 17 kann das Volumen des Probenraums 15 im Probengefäß 13 eingestellt werden. Zu Beginn der Probennahme ist der Kolben 17 vorzugsweise in einer ersten Position, in der das Volumen des Probenraums 15 minimal ist. Mit Beginn der Probennahme verschiebt sich dann der Kolben 17 in Richtung einer zweiten Position, in der das Volumen des Probenraums 15 maximal ist. Sobald der Kolben 17 die zweite Position erreicht hat oder die Probennahme beendet werden soll, bevor der Kolben die zweite Position 17 erreicht hat, wird das Ventil 11 geschlossen, so dass kein weiteres Reaktionsgemisch in den Probenraum 15 im Probengefäß 17 strömen kann.

Die Bewegung des Kolbens 17 kann zur Probennahme unterstützt werden, indem auf der dem Probenraum 15 abgewandten Seite des Kolbens 17 ein Druck angelegt wird, der niedriger ist als der Druck des Reaktionsgemischs. Dies führt gleichzeitig dazu, dass Reaktionsgemisch in den Probenraum 15 gesaugt wird. Um den niedrigeren Druck auf der dem Probenraum 15 abgewandten Seite des Kolbens 17 anzulegen, kann beispielsweise eine Gasleitung 19 auf der dem Probenraum 15 abgewandten Seite des Kolbens 17 in das Probengefäß 13 münden. Um den niedrigeren Druck anzulegen, wird durch die Gasleitung 19 Gas aus dem Probengefäß abgesaugt, so dass sich der Kolben 17 in Richtung seiner zweiten Position bewegt. Sobald die Probennahme beendet werden soll, wird das Absaugen des Gases beendet.

Das in dem Probenraum 15 enthalte Reaktionsgemisch wird dann in einem nächsten Schritt einer Analyseneinheit 21 zugeführt. Hier kann jede beliebige Analyseneinheit eingesetzt werden, mit der die gewünschten Untersuchungen am Gasgemisch durchgeführt werden können. Übliche Analyseneinheiten sind insbesondere solche, mit denen die Zusammensetzung des Reaktionsgemischs bestimmt werden kann. Um das Reaktionsgemisch der Analyseneinheit 21 zuführen zu können, ist die Analyseneinheit 21 über eine Messleitung 23 mit dem Probenraum 15 im Probengefäß 13 verbunden. Um die Messleitung 23 verschließen zu können, ist in der Messleitung 23 ein zweites Ventil 25 aufgenommen. Während der Probennahme ist das zweite Ventil 25 geschlossen.

Um die Probe der Analyseneinheit 21 zuzuführen, wird das zweite Ventil 25 geöffnet. Dann wird der Kolben 17 in Richtung seiner ersten Position bewegt, so dass das im Probenraum 15 enthaltene Reaktionsgemisch durch die Bewegung des Kolbens 17 aus dem Probenraum 15 in die Messleitung 23 gedrückt und durch die Messleitung 23 der Analyseneinheit 21 zugeführt wird. Die Bewegung des Kolbens 17 kann dabei entweder mit einem geeigneten Antrieb erfolgen oder wie hier dargestellt mit Hilfe von Druckgas, das über die Gasleitung 19 in das Probengefäß einströmt und so auf die dem Probenraum 15 abgewandte Seite des Kolbens 17 wirkt. Durch den vom Druckgas ausgeübten Druck auf den Kolben 17 wird dieser in Richtung des Probenraums gedrückt, so dass das im Probenraum enthaltene Reaktionsgemisch in die Messleitung 23 gedrückt wird. Sobald der Kolben 17 seine erste Position erreicht hat, in der das Volumen des Probenraums minimal ist, wird die Druckgaszufuhr beendet. Hierzu ist vorzugsweise ein drittes Ventil 27 in der Gasleitung 19 vorgesehen. Durch Schließen des dritten Ventils 27 wird die Druckgaszufuhr beendet.

Nach dem vollständigen Entleeren des Probenraums 15 kann dann eine erneute Probennahme erfolgen.

Insbesondere bei einem heißen Reaktionsgemisch ist es vorteilhaft, wenn das Probengefäß beheizbar ist. Hierzu wird vorzugsweise eine elektrische Beheizung 29 eingesetzt. Die elektrische Beiheizung kann zum Beispiel durch Heizwendeln, die das Probengefäß 13 umschließen, realisiert werden. Alternativ ist es auch möglich, einen Heizmantel einzusetzen.

Zur Steuerung der Bewegung des Kolbens 17 sind vorzugsweise Positionssensoren vorgesehen. Mit einem ersten Positionssensor 31 wird erfasst, ob sich der Kolben 17 in der ersten Position befindet und mit einem zweiten Positionssensor 33, ob sich der Kolben 17 in der zweiten Position befindet. Die Positionssensoren 31, 33 werden insbesondere genutzt, um die Bewegung des Kolbens durch Anlegen von Unterdruck oder Überdruck zu steuern. Wenn eine Probe genommen wird, wird die Gasentnahme zur Erzeugung eines Drucks unterhalb des Drucks des Reaktionsgemisches dann beendet, wenn der zweite Positionssensor 33 erfasst, dass der Kolben 17 seine zweite Position erreicht hat. Entsprechend wird die Druckgaszufuhr bei der Entnahme der Probe aus dem Probenraum 15 dann beendet, wenn mit dem ersten Positionssensor 31 erfasst wird, dass der Kolben 17 seine erste Position erreicht hat.

Alternativ zu der vorstehend beschriebenen Ausführungsform mit pneumatischer Bewegung des Kolbens 17 ist es auch möglich, den Kolben hydraulisch zu bewegen. In diesem Fall wird anstelle eines Gases eine Flüssigkeit eingesetzt, die aus dem Probengefäß 13 gesaugt wird, wenn sich der Kolben 17 in die zweite Position bewegen soll und in das Probengefäß 13 gedrückt wird, um den Kolben 17 in seine erste Position zu bewegen.

Neben der pneumatisch oder hydraulisch unterstützten Bewegung des Kolbens ist alternativ auch eine Bewegung des Kolbens mit Hilfe eines Antriebs, beispielsweise mit einem Schrittmotor möglich. Wenn ein Schrittmotor eingesetzt wird, kann direkt auch die Position des Kolbens erfasst werden, so dass in diesem Fall auf die Positionssensoren 31, 33 verzichtet werden kann. Wenn ein Antrieb für den Kolben eingesetzt wird, der keine Positionsbestimmung des Kolbens erlaubt, ist allerdings der Einsatz der Positionssensoren 31, 33 vorteilhaft, um die Bewegung des Kolbens in die jeweilige Richtung durch Abstellen des Antriebs zu beenden, sobald der entsprechende Positionssensor 31, 33 den Kolben erfasst hat.

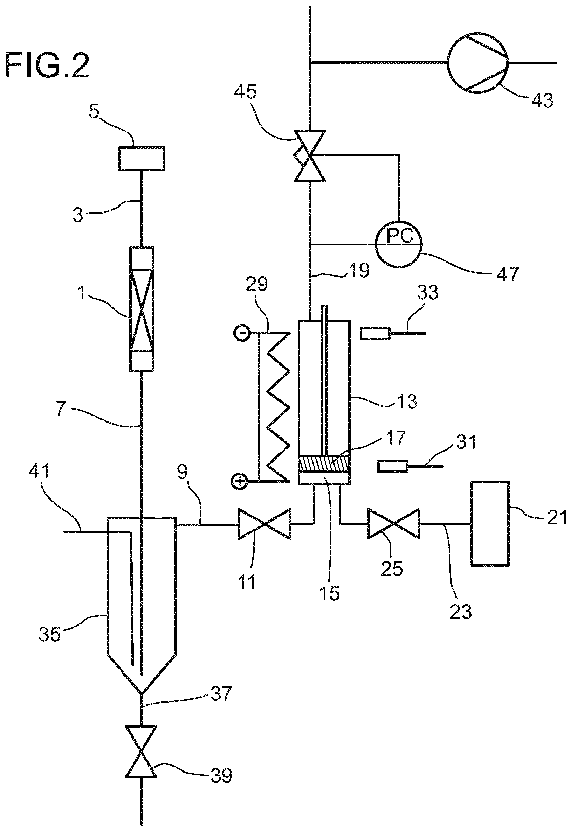

Figur 2 zeigt eine alternative Ausführungsform für einen Ausschnitt aus einer nicht erfindungsgemäßen Vorrichtung zur Untersuchung von Reaktionen mit einem Reaktor und einem mit dem Reaktor verbundenen Probengefäß. Im Unterschied zu der in Figur 1 dargestellten Ausführungsform ist hier dem Reaktor 1 ein Abscheider 35 angeordnet. In dem Abscheider 35 kann in der Reaktion entstehende Flüssigkeit abgeschieden werden. Dies ist insbesondere dann notwendig, wenn der Analyseneinheit 21 kein Gas zugeführt werden darf. Hierzu mündet die Ablaufleitung 7 aus dem Reaktor in dem Abscheider 35, so dass das Reaktionsgemisch aus dem Reaktor 1 durch die Ablaufleitung 7 dem Abscheider 35 zugeführt wird. Im Abscheider wird dann Flüssigkeit aus dem Reaktionsgemisch abgeschieden und über eine Entnahmeleitung 37 entnommen. Die Entnahmeleitung 37 ist mit einem vierten Ventil 39 verschließbar, so dass der Abscheider 35 jeweils zu gewünschten oder vorgegebenen Zeitpunkten entleert werden kann. Dies ist zum Beispiel in vorgegebenen Zeitintervallen oder bei Erreichen eines vorgegebenen Flüssigkeitsstandes möglich. Zudem ist es auch möglich, die im Abscheider 35 abgeschiedene Flüssigkeit einer Analyseneinheit zuzuführen, um die abgeschiedene Flüssigkeit quantitativ und/oder qualitativ zu untersuchen, insbesondere die in der Flüssigkeit enthaltenen Komponenten zu bestimmen und gegebenenfalls auch die Menge der einzelnen in der Flüssigkeit enthaltenen Komponenten.

Zusätzlich ist es möglich, in den Abscheider eine Inertgasleitung 41 zu führen. Über die Inertgasleitung ist es möglich, das Reaktionsgemisch zu verdünnen. Dies kann beispielsweise dann notwendig sein, wenn die Konzentration an einzelnen Komponenten für die Analyse sonst zu hoch wäre. Alternativ ist es auch möglich, durch das über die Inertgasleitung 41 zugeführte Gas noch in der sich im Abscheider sammelnden Flüssigkeit enthaltenes Gas auszutreiben. Dies ist zum Beispiel für eine quantitative Analyse des Reaktionsgemischs erforderlich. Um noch Gas aus der Flüssigkeit austreiben zu können, mündet die Inertgasleitung 41 vorzugsweise als Tauchrohr in der im Abscheider 35 gesammelten Flüssigkeit. Um dies sicherzustellen, wird dann vorzugsweise nur soviel Flüssigkeit entnommen, bis ein minimaler Flüssigkeitsstand erreicht ist, der noch so hoch ist, dass die Inertgasleitung 41 in die Flüssigkeit eintaucht. Als Inertgase, die über die Inertgasleitung 41 zugeführt werden, eignen sich zum Beispiel Stickstoff oder Edelgase, bevorzugt Stickstoff.

Aus dem Abscheider 35 zweigt an einer Position oberhalb des maximalen Flüssigkeitsstandes die Probenleitung 9 ab, durch die gasförmiges Reaktionsgemisch in das Probengefäß 13 eingeleitet werden kann. Die Probenentnahme erfolgt dabei auf die gleiche Weise wie vorstehend zu Figur 1 beschrieben.

Um die Probenentnahme aus dem Abscheider 35 zu erleichtern, ist eine Vakuumpumpe 43 vorgesehen. Mit der Vakuumpumpe 43 kann ein Druck auf der dem Probenraum 15 abweichenden Seite des Kolbens 17 angelegt werden, der niedriger ist als der Druck im Abscheider. Hierdurch wird bei geöffnetem ersten Ventil 11 gasförmiges Reaktionsgemisch aus dem Abscheider 35 in den Probenraum 15 gesaugt. Die Vakuumpumpe 43 ist insbesondere dann vorteilhaft, wenn die Reaktion unter Umgebungsdruck oder einem Druck unterhalb des Umgebungsdrucks durchgeführt wird. Wenn die Reaktion bei einem Druck durchgeführt wird, der oberhalb dem Umgebungsdruck liegt, ist in der Regel ein Auslass an die Umgebung ausreichend, da in diesem Fall durch den Überdruck des Reaktionsgemischs das Reaktionsgemisch in den Probenraum 15 gedrückt wird und den Kolben 17 nach oben bewegt. Um zu verhindern, dass der Kolben zu schnell nach oben gedrückt wird, ist es in diesem Fall möglich, den Kolben entweder mit einem Gewicht zu versehen oder vorzugsweise in dem Auslass an die Umgebung ein Ventil einzusetzen, das nur so weit geöffnet wird, dass der Kolben sich mit der gewünschten Geschwindigkeit hebt. Hierzu ist ein Aufbau ausreichend, wie er in Figur 1 dargestellt ist.

Alternativ ist es auch möglich, auf die Pumpe 43 zu verzichten und den notwendigen Überdruck im Abscheider 35 durch die Zufuhr des Inertgases durch die Inertgasleitung 41 zu erzeugen.

Damit das Reaktionsgemisch aus dem Probenraum 15 entnommen werden kann, wird dann, wie vorstehend beschrieben ein Überdruck auf der dem Probenraum 15 gegenüberliegenden Seite des Kolbens 17 angelegt, so dass der Kolben 17 in Richtung des Probenraums 15 gedrückt wird und so das im Probenraum 15 enthaltene Gemisch aus dem Probenraum 15 durch die Messleitung 23 zur Analyseeinheit 21 geleitet wird.

Zur Steuerung des Kolbens 17 ist in der in Figur 2 dargestellten Ausführungsform ein regelbares Ventil 45 in der Gasleitung 19 aufgenommen. Hierzu wird in der Gasleitung 19 zwischen dem Probengefäß 13 und dem regelbaren Ventil 45 der Druck gemessen und mit einer Druckregelung 47 wird das Ventil gesteuert. Wenn der in der Gasleitung 19 gemessene Druck vom gewünschten Druck abweicht, wird das regelbare Ventil 45 entsprechend eingestellt. Bei einem zu niedrigen gemessenen Druck wird das regelbare Ventil 45 weiter geöffnet und bei einem zu hohen gemessenen Druck weiter geschlossen. Bei einem zu niedrigen gemessenen Druck wird während der Probenentnahme der Kolben 17 zu schnell in seine zweite Position bewegt und das Volumen des Probenraums 15 vergrößert, bei der Bewegung des Kolbens 17 in seine erste Position wird der Kolben 17 zu langsam bewegt und das im Probenraum 15 enthaltene Reaktionsgemisch wird zu langsam aus dem Probenraum 15 in die Analyseneinheit 21 geleitet. Bei zu hohem gemessenen Druck wird während der Probenentnahme der Kolben 17 zu langsam bewegt, so dass die Probennahme nicht schnell genug erfolgt oder der Druck, der auf den Kolben 17 wirkt sogar so hoch ist, dass sich dieser nicht bewegt und so keine Probe entnommen wird. Bei Bewegung des Kolbens 17 in seine erste Position bewirkt ein zu hoher Druck eine zu schnelle Bewegung in die erste Position, so dass das Reaktionsgemisch aus dem Probenraum 15 zu schnell verdrängt wird.

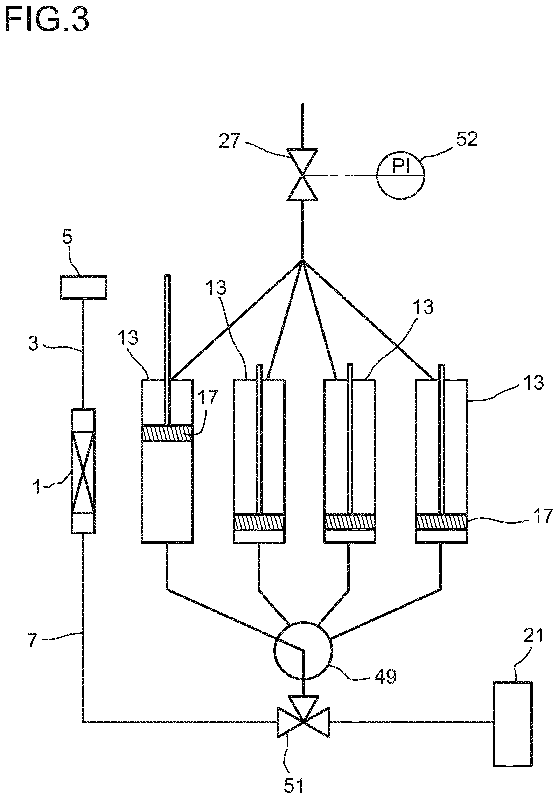

Um über einen längeren Zeitraum den Reaktionsverlauf zu analysieren sind mehrere Probengefäße mit dem Reaktor verbunden, die nacheinander jeweils eine Probe aufnehmen können. Dies ist beispielhaft für einen Reaktor der Vorrichtung in Figur 3 dargestellt.

Um nacheinander mehrere Proben aus dem Reaktor entnehmen zu können, ist der Reaktor über ein Mehrwegeventil 49 mit mehreren Probengefäßen 13 verbunden. Zwischen dem Reaktor und dem Mehrwegeventil 49 befindet sich zusätzlich ein 3-Wege-Ventil 51. Das 3-Wege-Ventil 51 wird dazu genutzt, entweder eine Verbindung vom Reaktor 1 zu den Probengefäßen 13 oder alternativ von den Probengefäßen 13 zur Analyseneinheit 21 herzustellen. Um eine Probe nehmen zu können, wird das 3-Wege-Ventil 51 so eingestellt, dass eine Verbindung vom Reaktor 1 zum Mehrwegeventil 49 geöffnet und die Verbindung vom Mehrwegeventil 49 zur Analyseneinheit 21 geschlossen ist. Mit dem Mehrwegeventil 49 wird dann jeweils die Verbindung in das Probengefäß 13 geöffnet, das während der Probennahme befüllt werden soll. Entsprechend wird für die Analyse der in den Probengefäßen 13 enthaltenen Proben das 3-Wege-Ventil 51 so geschaltet, dass die Verbindung vom 3-Wege-Ventil 51 zur Analyseneinheit 21 geöffnet ist und mit dem Mehrwegeventil 49 die Verbindung zu dem Probengefäß 13, aus dem die gewünschte Probe entnommen und zur Analyseneinheit 21 geleitet werden soll.

Mit dem Mehrwegeventil 49 ist es auf einfache Weise möglich, nacheinander mehrere Proben zu nehmen, indem nach Beendigung der Probennahme in ein Probengefäß 13 das Mehrwegeventil 49 umgeschaltet und die Verbindung in das nächste Probengefäß 13 geöffnet wird. Dies kann so oft wiederholt werden, bis in allen Probengefäßen 13 Proben enthalten sind. Entsprechend können dann auch die Proben aus den einzelnen Probengefäßen 13 nacheinander der Analyseneinheit 21 zugeführt werden, indem auch bei der Probenentnahme das Mehrwegeventil 49 zu einem weiteren Probengefäß 13 umgeschaltet wird, sobald ein Probengefäß 13 entleert ist. Um die Bewegung der Kolben 17 in den Probengefäßen zu unterstützen, ist auch hier jedes Probengefäß 13 mit einer Gasleitung 19 verbunden, so dass - wie vorstehend für die Figuren 1 und 2 beschrieben - die Bewegung des Kolbens 17 durch Aufbringen von Druck auf der dem Probenraum 15 abgewandten Seite oder durch Anlegen eines Unterdrucks auf der dem Probenraum 15 abgewandten Seite unterstützt werden kann. Hierbei ist es möglich, den Druck auf alle Kolben gleichzeitig auszuüben oder gleichzeitig an alle Kolben 17 Unterdruck anzulegen, da nur in dem Probengefäß 13 zu dem die Verbindung durch das Mehrwegeventil 49 geöffnet ist, der Kolben 17 zum Aufnehmen einer Probe oder zum Entleeren bewegt werden kann. In den übrigen Probengefäßen stellt sich wegen der geschlossenen Verbindung ein Druckgleichgewicht ein, durch die die Bewegung des Kolbens verhindert wird.

In der Gasleitung 19, durch die das Gas zur Unterstützung der Kolbenbewegung geleitet wird, ist auch hier das dritte Ventil 27 aufgenommen. Das Ventil kann mit einer Druckanzeige 52 ausgestattet sein, um so eine Kontrolle zu haben, ob gerade ein Probengefäß 13 befüllt oder entleert wird. Bei einem Druck unterhalb des Reaktordrucks wird ein Probengefäß 13 befüllt und bei einem Druck oberhalb des Reaktordrucks wird die Probe aus einem Probengefäß 13 der Analyseneinheit 21 zugeführt.

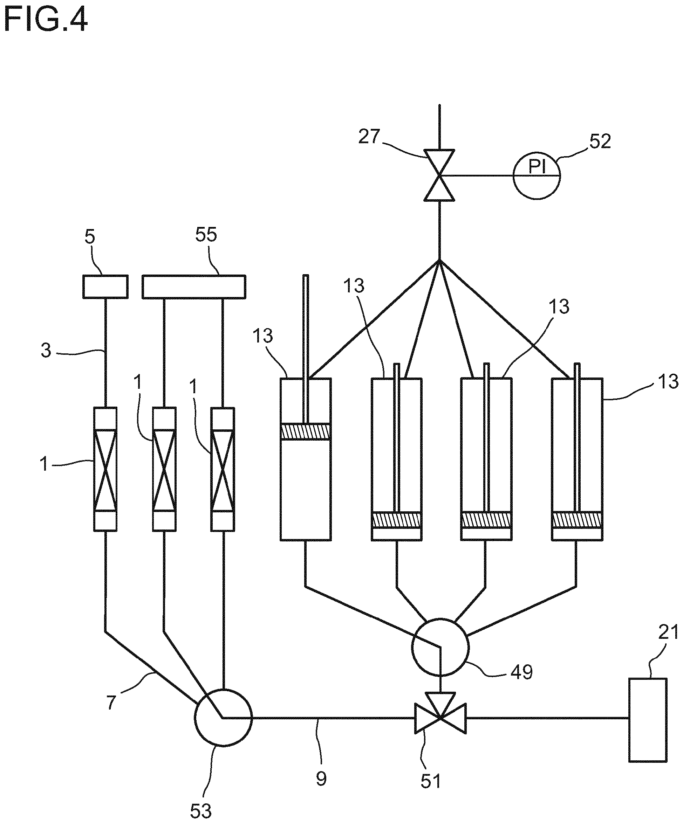

Figur 4 zeigt eine weitere nicht erfindungsgemäße Ausführungsform einer Vorrichtung zur Untersuchung von Reaktionen.

Die in Figur 4 gezeigte Ausführungsform unterscheidet sich von der in Figur 3 dargestellten durch die Verbindung mehrerer Reaktoren 1 mit den Probengefäßen 13. Um die Reaktoren 1 mit den Probengefäßen zu verbinden, ist ein zweites Mehrwegeventil 53 umfasst, über das die Reaktoren 1 mit dem 3-Wege-Ventil 51 verbunden sind. Bei der hier dargestellten Ausführungsform kann jeweils aus einem Reaktor 1 eine Probe genommen werden. Hierzu wird das zweite Mehrwegeventil 53 so geschaltet, dass eine Verbindung von dem Reaktor 1, aus dem die Probe genommen werden soll, zum 3-Wege-Ventil 51 geöffnet wird. Die Verbindung von den anderen Reaktoren 1 zum 3-Wege-Ventil 51 ist geschlossen. Durch das Mehrwegeventil 49 besteht dann die Möglichkeit, mehrere Proben nacheinander zu nehmen. Alternativ ist es auch möglich, aus jedem Reaktor jeweils nur eine Probe zu nehmen. In diesem Fall werden nach dem Nehmen einer Probe beide Mehrwegeventile 49, 53 geschaltet, um die Verbindung von einem weiteren Reaktor 1 in ein weiteres Probengefäß 13 zu öffnen. Dies kann so oft wiederholt werden, bis aus allen Reaktoren Proben genommen sind und alle Probenräume 15 eine Probe enthalten.

Nach der Probennahme können die Proben der Analyseneinheit 21 zugeführt werden. Dies erfolgt, wie vorstehen zu Figur 3 beschrieben. Durch den hier dargestellten Aufbau ist es nur möglich, entweder eine Probe zu nehmen oder eine Probe aus einem Probengefäß 13 zur Analyseneinheit 21 zu führen. Nicht möglich ist es, gleichzeitig eine Probe aus einem Reaktor zu nehmen und aus einem anderen Probengefäß 13 eine bereits genommene Probe der Analyseneinheit 21 zuzuführen.

Um in mehreren Reaktoren die gleiche Reaktion durchzuführen, ist es vorteilhaft, wenn alle Reaktoren, denen die gleiche Eduktzusammensetzung zugeführt werden soll, an einem gemeinsamen Mischer 55 anzuschließen. Reaktoren, denen eine andere Eduktzusammensetzung zugeführt werden soll, werden an einen anderen Mischer 5 angeschlossen. Wenn in jedem Reaktor eine unterschiedliche Zusammensetzung untersucht werden soll, ist es erforderlich, jedem Reaktor 1 mit einem separaten Mischer 5 zu verbinden.

Alternativ ist es in allen Ausführungsformen selbstverständlich auch möglich, die Edukte direkt in die Reaktoren 1 einzuleiten und auf die vorgeschalteten Mischer 5, 55 zu verzichten. Auch kann die Mischung in der Zuleitung 3 erfolgen, indem die einzelnen Edukte über eine geeignete Verbindungsstelle in die Zuleitung 3 eingeleitet werden.

Weiterhin ist es möglich, die Vorrichtung so zu gestalten, dass mehrere Reaktoren vorgesehen sind, die jeweils mit mehreren Probengefäßen verbunden sind. In diesem Fall ist das zweite Mehrwegeventil 53 nicht erforderlich, da jeder Reaktor seine eigene Gruppe an Probengefäßen aufweist.

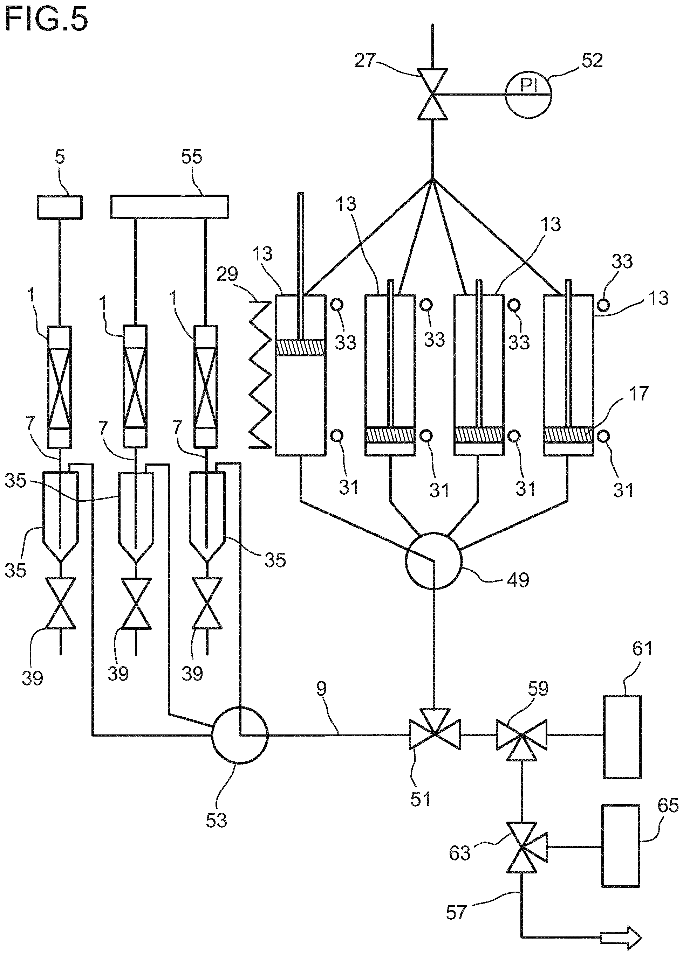

Figur 5 zeigt eine nicht erfindungsgemäße Vorrichtung zur Untersuchung von Reaktionen in einer weiteren Ausführungsform. Im Unterschied zu Figur 4 sind bei der in Figur 5 dargestellten Ausführungsform die Reaktoren 1 jeweils mit einem Abscheider 35 verbunden. Der Aufbau aus Reaktor und Abscheider entspricht dabei dem in Figur 2 dargestellten. Die Probennahme erfolgt wie vorstehend zu Figur 4 beschrieben.

Anders als die vorstehend zu den Figuren 1 bis 4 beschriebenen Ausführungsformen umfasst der Analysenbereich mehrere Analyseneinheiten 21. Hierzu sind in der Messleitung 23 mehrere 3-Wege-Ventile 59, 63 aufgenommen. Über jedes 3-Wege-Ventil 59, 63 kann entweder eine Verbindung zu einer Analyseneinheit 61,65 geöffnet werden oder es wird eine Verbindung zu einem nachfolgenden 3-Wege-Ventil beziehungsweise einem Auslass 57 geöffnet. So ist es zum Beispiel möglich, zunächst das erste 3-Wege-Ventil 59 so zu schalten, dass Reaktionsgemisch der ersten Analyseneinheit 61 zugeführt wird. Anschließend wird das erste 3-Wege-Ventil 59 so geschaltet, dass das Reaktionsgemisch an der ersten Analyseneinheit 61 vorbei zum zweiten 3-Wege-Ventil 63 geleitet wird. Das zweite 3-Wege-Ventil 63 ist dann so geschaltet, dass das Reaktionsgemisch in die zweite Analyseneinheit 65 geleitet wird. Wenn keine Probe genommen werden soll, werden beide 3-Wege-Ventile 59, 63 so geschaltet, dass das Reaktionsgemisch zum Auslass 57 gelangt. Hierbei ist es auch möglich, eine Probe jeweils nur zu einer Analyseneinheit 61, 65 zu leiten, wobei von der durchzuführenden Untersuchung abhängt, welche Analyseneinheit 61, 65 genutzt wird. Weiterhin ist es auch möglich, insbesondere bei länger dauernden Analysen, eine Probe der ersten Analyseneinheit 61 zuzuführen und während die Probe noch untersucht wird, eine weitere Probe aus einem anderen Probengefäß der zweiten Analyseneinheit 65. Wenn die Untersuchen sehr lange dauern, ist es zur Beschleunigung der Untersuchungen auch möglich, noch weitere Analyseneinheiten einzusetzen, die jeweils parallel betrieben werden können.

### Bezugszeichenliste

- 1: Reaktor
- 3: Zuleitung
- 5: Mischer
- 7: Ablaufleitung
- 9: Probenleitung
- 11: erstes Ventil
- 13: Probengefäß
- 15: Probenraum
- 17: Kolben
- 19: Gasleitung
- 21: Analyseneinheit
- 23: Messleitung
- 25: zweites Ventil
- 27: drittes Ventil
- 29: Beheizung
- 31: erster Positionssensor
- 33: zweiter Positionssensor
- 35: Abscheider
- 37: Entnahmeleitung
- 39: viertes Ventil
- 41: Inertgasleitung
- 43: Pumpe
- 45: regelbares Ventil
- 47: Druckregelung
- 49: Mehrwegeventil
- 51: 3-Wege-Ventil
- 52: Druckanzeige
- 53: zweites Mehrwegeventil
- 55: gemeinsamer Mischer
- 57: Auslass

## Patentansprüche

1. Vorrichtung zur Untersuchung von Reaktionen, umfassend mehrere Reaktoren (1), wobei jeder Reaktor (1) mit mindestens zwei nur diesem Reaktor zugeordneten Probengefäßen (13) verbunden ist, wobei jedes Probengefäß (13) ein einstellbares Volumen aufweist.

2. Vorrichtung gemäß Anspruch 1, **dadurch gekennzeichnet, dass** jedes Probengefäß (13) einen Zylinder mit einem darin verschiebbaren Kolben (17) umfasst.

3. Vorrichtung gemäß Anspruch 2, **dadurch gekennzeichnet, dass** am Probengefäß (13) Sensoren (31, 33) angebracht sind, mit denen die Position des verschiebbaren Kolbens (17) erfasst wird.

4. Vorrichtung gemäß einem der Ansprüche 1 bis 3, **dadurch gekennzeichnet, dass** jeder Reaktor (1) einen Auslass umfasst, der mit einem Mehrwegeventil (51) verbunden ist und jeder Ausgang des Mehrwegeventils (49) mit einem Probengefäß verbunden ist.

5. Vorrichtung gemäß einem der Ansprüche 1 bis 4, **dadurch gekennzeichnet, dass** zwischen dem Reaktor (1) und dem Probengefäß (13) ein schaltbares Ventil aufgenommen ist, mit dem der Zulauf in das Probengefäß (13) gesteuert werden kann.

6. Vorrichtung gemäß einem der Ansprüche 1 bis 5, **dadurch gekennzeichnet, dass** die Reaktoren (1) kontinuierlich von Reaktionsmedien durchströmbar sind.

7. Vorrichtung gemäß einem der Ansprüche 1 bis 6, **dadurch gekennzeichnet, dass** die Probengefäße (13) beheizbar sind.

8. Vorrichtung gemäß einem der Ansprüche 1 bis 7, **dadurch gekennzeichnet, dass** die Probengefäße (13) mit einer Quelle für ein Inertmedium verbunden sind.

9. Verfahren zur Untersuchung von Reaktionen in einer Vorrichtung gemäß einem der Ansprüche 1 bis 8, umfassend:
(a) Durchführen einer Reaktion in jedem der Reaktoren (1), wobei alle Reaktionen unter den gleichen Reaktionsbedingungen durchgeführt werden oder wobei in jedem Reaktor (1) die Reaktionsbedingungen variiert werden;
(b) Entnehmen einer Probe aus jedem Reaktor (1) zu einem vorgegebenen Zeitpunkt in das Probengefäß (13), wobei aus jedem Reaktor (1) zum vorgegebenen Zeitpunkt eine Probe entnommen wird oder gepulste Entnahme von Proben, wobei mit jedem JC Entnahmepuls aus dem Reaktor (1) entnommenes Reaktionsmedium in ein neues Probengefäß (13) eingebracht wird;
(c) Untersuchung der in den Probengefäßen (13) enthaltenen Proben.

10. Verfahren gemäß Anspruch 9, **dadurch gekennzeichnet, dass** während der Reaktion in jedem Reaktor (1) Druck und/oder Temperatur erfasst werden.

11. Verfahren gemäß Anspruch 9 oder 10, **dadurch gekennzeichnet, dass** die dem Reaktor (1) entnommene Probe im Probengefäß (13) mit einem inerten Medium gemischt wird.

12. Verfahren gemäß einem der Ansprüche 9 bis 11, **dadurch gekennzeichnet, dass** nacheinander aus dem Reaktor entnommene Proben vor der Untersuchung in Schritt (c) aus dem Probengefäß (13) in einen weiteren Behälter transferiert werden und das in dem Behälter erzeugte Gemisch aus zu verschiedenen Zeitpunkten entnommenen Proben untersucht wird.

13. Verfahren gemäß einem der Ansprüche 9 bis 12, **dadurch gekennzeichnet, dass** die Untersuchung der Probe mittels einer analytischen Methode aus der Gruppe chromatographischer, spektrometrischer oder spektroskopischen Verfahren oder einer Kombination derselben durchgeführt wird.

14. Verfahren gemäß Anspruch 12 und 13, **dadurch gekennzeichnet, dass** das Gemisch aus zu verschiedenen Zeitpunkten entnommenen Proben zur Generierung von Modellen chemometrischer Verfahren verwendet wird.

## Claims

1. An apparatus for analyzing reactions, comprising multiple reactors (1), wherein each reactor (1) is connected to at least two sample vessels (13) assigned only to this reactor, wherein each sample vessel (13) has an adjustable volume.

2. The apparatus according to claim 1, wherein each sample vessel (13) comprises a cylinder with a piston (17) movable therein.

3. The apparatus according to claim 2, wherein sensors (31, 33) by which the position of the movable piston (17) is detected are mounted on the sample vessel (13).

4. The apparatus according to any of claims 1 to 3, wherein each reactor (1) comprises an outlet connected to a multiway valve (51), and each outlet of the multiway valve (49) is connected to a sample vessel.

5. The apparatus according to any of claims 1 to 4, wherein a switchable valve by which the feed into the sample vessel (13) can be controlled is accommodated between the reactor (1) and the sample vessel (13).

6. The apparatus according to any of claims 1 to 5, wherein reaction media can flow continuously through the reactors (1).

7. The apparatus according to any of claims 1 to 6, wherein the sample vessels (13) are heatable.

8. The apparatus according to any of claims 1 to 7, wherein the sample vessels (13) are connected to a source of an inert medium.

9. A method of analyzing reactions in an apparatus according to any of claims 1 to 8, comprising:
(a) performing a reaction in each of the reactors (1), where all reactions are conducted under the same reaction conditions or where the reaction conditions are varied in each reactor (1);
(b) taking a sample from each reactor (1) at a given time into the sample vessel (13), wherein a sample is taken at the given time from each reactor (1), or pulsed sampling, wherein reaction medium taken from the reactor (1) with each sampling pulse is introduced into a new sample vessel (13) ;
(c) analyzing the samples present in the sample vessels (13).

10. The method according to claim 9, wherein pressure and/or temperature are detected during the reaction in each reactor (1).

11. The method according to claim 9 or 10, wherein the sample taken from the reactor (1) is mixed with an inert medium in the sample vessel (13).

12. The method according to any of claims 9 to 11, wherein samples taken successively from the reactor, before being analyzed in step (c), are transferred from the sample vessel (13) to a further vessel, and the mixture of samples taken at various times that is produced in the vessel is analyzed.

13. The method according to any of claims 9 to 12, wherein the analysis of the sample is performed by means of an analytical method from the group of chromatographic, spectrometric and spectroscopic methods or a combination thereof.

14. The method according to claim 12 and 13, wherein the mixture of samples taken at different times is used to generate models of chemometric methods.

## Revendications

1. Dispositif pour l'analyse de réactions, comprenant une pluralité de réacteurs (1), chaque réacteur (1) étant relié à au moins deux récipients à échantillons (13) associés uniquement à ce réacteur, chaque récipient à échantillons (13) présentant un volume réglable.

2. Dispositif selon la revendication 1, **caractérisé en ce que** chaque récipient à échantillons (13) comprend un cylindre dans lequel un piston (17) est déplaçable.

3. Dispositif selon la revendication 2, **caractérisé en ce que** des capteurs (31, 33) sont montés sur le récipient à échantillons (13), au moyen desquels la position du piston (17) déplaçable est détectée.

4. Dispositif selon l'une des revendications 1 à 3, **caractérisé en ce que** chaque réacteur (1) comprend une sortie reliée à une vanne multivoies (51) et chaque sortie de la vanne multivoies (49) est reliée à un récipient à échantillons.

5. Dispositif selon l'une des revendications 1 à 4, **caractérisé en ce qu'**entre le réacteur (1) et le récipient à échantillons (13) est prévue une vanne commutable permettant de commander l'afflux dans le récipient à échantillons (13).

6. Dispositif selon l'une des revendications 1 à 5, **caractérisé en ce que** les réacteurs (1) sont aptes à être traversés en continu par des milieux réactionnels.

7. Dispositif selon l'une des revendications 1 à 6, **caractérisé en ce que** les récipients d'échantillons (13) sont aptes à être chauffés.

8. Dispositif selon l'une des revendications 1 à 7, **caractérisé en ce que** les récipients d'échantillons (13) sont reliés à une source de milieu inerte.

9. Procédé d'analyse de réactions dans un dispositif selon l'une des revendications 1 à 8, comprenant :
(a) réaliser une réaction dans chacun des réacteurs (1), toutes les réactions étant réalisées dans les mêmes conditions de réaction ou les conditions de réaction étant modifiées dans chaque réacteur (1) ;
(b) prélever dans le récipient à échantillons (13) un échantillon de chaque réacteur (1) à un moment prédéterminé, un échantillon étant prélevé de chaque réacteur (1) au moment prédéterminé ou un prélèvement d'échantillons étant fait par impulsions, le milieu réactionnel prélevé du réacteur (1) étant introduit dans un nouveau récipient à échantillons (13) à chaque impulsion de prélèvement ;
(c) analyser les échantillons contenus dans les récipients d'échantillons (13).

10. Procédé selon la revendication 9, **caractérisé en ce que** la pression et/ou la température sont enregistrées dans chaque réacteur (1) pendant la réaction.

11. Procédé selon la revendication 9 ou 10, **caractérisé en ce que** l'échantillon prélevé dans le réacteur (1) est mélangé à un milieu inerte dans le récipient à échantillons (13).

12. Procédé selon l'une des revendications 9 à 11, **caractérisé en ce que** des échantillons prélevés successivement dans le réacteur sont transférés du récipient à échantillons (13) dans un autre récipient avant l'analyse à l'étape (c), et le mélange produit dans le récipient à partir d'échantillons prélevés à différents moments est analysé.

13. Procédé selon l'une des revendications 9 à 12, **caractérisé en ce que** l'examen de l'échantillon est effectué au moyen d'une méthode analytique choisie dans le groupe constitué par les méthodes chromatographiques, spectrométriques ou spectroscopiques, ou une combinaison de celles-ci.

14. Procédé selon les revendications 12 et 13, **caractérisé en ce que** le mélange d'échantillons prélevés à différents moments est utilisé pour générer des modèles de procédés chimiométriques.
